# EUROPEAN PATENT APPLICATION

(11) **EP 4 831 943 A1**
(43) Date of publication of application: **28.10.2026**
(21) Application number: 24905417.2
(22) Date of filing: 16.05.2024
(51) Int. Cl.: G06V 40/70

(54) **BIOMETRIC IDENTIFICATION CONTROL SYSTEM, METHOD, AND VEHICLE**

(30) Priority: 22.12.2023 CN 202311790853
(71) Applicant: BYD Company Limited, Shenzhen, Guangdong 518118 (CN)
(72) Inventor: WANG, Yongpan, Shenzhen, Guangdong 518118 (CN); HOU, Rong, Shenzhen, Guangdong 518118 (CN); LI, Faxi, Shenzhen, Guangdong 518118 (CN); LIU, Juan, Shenzhen, Guangdong 518118 (CN); WU, Lihua, Shenzhen, Guangdong 518118 (CN)
(74) Representative: Taor, Simon Edward William
(86) International application number: PCT/CN2024/093702
(87) International publication number: WO 2025/129913

(57) **Abstract**

A biometric identification control system, a method, and a vehicle. The biometric identification control system comprises a biometric identifier, a multimedia head unit, and a vehicle body controller. The multimedia head unit is separately connected to the biometric identifier and the vehicle body controller. The biometric identifier is used for capturing a biometric feature image, preprocessing the biometric feature image, and outputting biometric feature information. The multimedia head unit is used for receiving the biometric feature information, sequentially carrying out reprocessing, feature extraction, and comparison on the biometric feature information, outputting a feature matching result, and, when the feature matching result indicates successful matching, sending a feature matching instruction to the vehicle body controller. The vehicle body controller is used for, based on the feature matching instruction, controlling vehicle response.

## Description

### CROSS-REFERENCE TO RELATED APPLICATIONS

The present disclosure claims the priority of the Chinese patent application filed with the China National Intellectual Property Administration on December 22, 2023, with the application number 202311790853.5 and the invention title "BIOMETRIC IDENTIFICATION CONTROL SYSTEM, METHOD, AND VEHICLE", which is incorporated herein by reference in its entirety..

### FIELD

The present disclosure relates to the technical field of intelligent vehicles, in particular to a biometric identification control system, a method, and a vehicle.

### BACKGROUND

Existing biometric identification devices have many defects such as high power consumption, serious time delay, the need to assemble an additional vehicle-machine system to realize the identification function, and extremely high equipment investment cost. They can only be used in indoor scenes with low requirements on power consumption and time delay, and thus cannot be applied to on-vehicle systems with complex driving environments and driving requirements.

### SUMMARY

Embodiments of the present disclosure provide a biometric identification control system, a method, and a vehicle to solve the problems that the palm vein identification technology in the prior art has high power consumption, serious time delay and high cost, is difficult to apply to the on-vehicle environment, and has limited application scenarios.

One of the objectives of the present disclosure is to provide a biometric identification control system, which is applied to a vehicle equipped with a multimedia head unit. The biometric identification control system includes a biometric identifier, a multimedia head unit, and a vehicle body controller; wherein,
the multimedia head unit is separately connected to the biometric identifier and the vehicle body controller;
the biometric identifier is used for capturing a biometric feature image, preprocessing the biometric feature image, and outputting biometric feature information;
the multimedia head unit is used for receiving the biometric feature information, sequentially carrying out reprocessing, feature extraction, and comparison on the biometric feature information, and outputting a feature matching result; and,
when the feature matching result indicates successful matching, sending a feature matching instruction to the vehicle body controller;
the vehicle body controller is used for controlling vehicle response based on the feature matching instruction,.

In one embodiment, the multimedia head unit includes an image processor, a feature library, a feature matcher, and a controller; wherein,
the image processor is used for performing filtering processing and binarization processing on the biometric feature information;
the feature library is used for storing image samples of the vehicle owner;
the feature matcher is used for carrying out feature extraction on the biometric feature information after binarization processing, comparing with the image samples, and outputting a feature matching result; and
the controller is used for sending a feature matching instruction to the vehicle body controller, when the feature matching result indicates successful matching.

In one embodiment, the biometric identification control system further includes:
a terminal, the terminal is connected to the multimedia head unit; wherein,
the multimedia head unit is further used for receiving a registration instruction sent by the terminal, controlling the biometric identifier to capture image samples of the vehicle owner, and storing the image samples to establish the feature library.

In one embodiment, the controller is further used for sending vehicle safety reminder information to the terminal, and/or controlling the system to enter a sleep state, when the feature matching result indicates failed matching for N consecutive times.

In one embodiment, the biometric identifier includes a wake-up device, a on-board controller, and a capture device; the on-board controller is separately connected to the wake-up device and the capture device; the capture device includes a preprocessing unit;
the on-board controller is used for receiving a wake-up signal monitored by the wake-up device, and controlling the capture device to capture the biometric feature image; and
the preprocessing unit is used for performing primary filtering processing on the biometric feature image, and outputting the biometric feature information.

In one embodiment, the biometric identifier further includes a display; the on-board controller is connected to the display;
the on-board controller is used for controlling the display to be in different display modes based on the received wake-up signal; and/or,
used for controlling the display to be in different prompt modes based on the received feature matching result output by the multimedia head unit.

In one embodiment, the viewing angle range monitored by the wake-up device covers the viewing angle range monitored by the capture device;
the viewing angle range at least includes a monitoring angle;
the on-board controller is used for adjusting the angular direction of the capture device according to the position of an object within the viewing angle range of the wake-up device.

In one embodiment, the biometric identification control system further includes a memory; the memory is connected to the multimedia head unit; wherein,
the multimedia head unit is used for receiving historical driving habit information sent by the memory, and sending a adjustment instruction to the vehicle body controller; and
the vehicle body controller is used for controlling the vehicle to execute a response action corresponding to the adjustment instruction according to the adjustment instruction.

The second objective of the present disclosure is to provide a biometric identification control method, which is applied to the biometric identification control system provided in the first objective of the present disclosure. The method includes:
the biometric identifier captures a biometric feature image, preprocesses the biometric feature image, and outputs biometric feature information;
the multimedia head unit receives the biometric feature information, sequentially carries out reprocessing, feature extraction, and comparison on the biometric feature information, and outputs a feature matching result;
when the feature matching result indicates successful matching, the multimedia head unit sends a feature matching instruction to the vehicle body controller; and
the vehicle body controller controls vehicle response based on the feature matching instruction.

In one embodiment, the multimedia head unit receiving the biometric feature information, sequentially carrying out reprocessing, feature extraction, and comparison on the biometric feature information, and outputting a feature matching result includes:
the image processor performs filtering processing and binarization processing on the biometric feature information;
the feature library stores image samples of the vehicle owner;
the feature matcher carries out feature extraction on the biometric feature information after binarization processing, compares with the image samples, and outputs a feature matching result; and
the controller sends a feature matching instruction to the vehicle body controller when the feature matching result indicates successful matching.

In one embodiment, the feature library storing image samples of the vehicle owner includes:
the multimedia head unit receives a registration instruction sent by the terminal, controls the biometric identifier to capture image samples of the vehicle owner, and stores the image samples.

In one embodiment, the multimedia head unit receiving the biometric feature information, sequentially carrying out reprocessing, feature extraction, and comparison on the biometric feature information, and outputting a feature matching result includes:
the controller sends vehicle safety reminder information to the terminal, and/or controls the system to enter a sleep state, when the feature matching result indicates failed matching for N consecutive times.

In one embodiment, the biometric identifier capturing a biometric feature image, preprocesses the biometric feature image, and outputting biometric feature information includes:
the on-board controller receives a wake-up signal monitored by the wake-up device, and controls the capture device to capture the biometric feature image; and
the preprocessing unit performs primary filtering processing on the biometric feature image, and outputs the biometric feature information.

In one embodiment, the method further includes:
the on-board controller controls the display to be in different display modes based on the received wake-up signal; and/or, controls the display to be in different prompt modes based on the feature matching result output by the received multimedia head unit.

In one embodiment, the biometric identifier capturing a biometric feature image further includes:
the on-board controller adjusts the angular direction of the capture device according to the position of an object within the viewing angle range of the wake-up device.

In one embodiment, before the vehicle body controller controlling vehicle response based on the feature matching instruction, the method includes:
the multimedia head unit receives historical driving habit information sent by the memory, and sends a adjustment instruction to the vehicle body controller; and
the vehicle body controller controls the vehicle to execute a response action corresponding to the adjustment instruction based on the adjustment instruction.

The third objective of the present disclosure is to provide a vehicle, which is equipped with a multimedia head unit. The vehicle is equipped with the biometric identification control system provided in the first objective of the present disclosure, and/or executes the biometric identification control method provided in the second objective of the present disclosure.

Compared with the prior art, the present disclosure has the following advantages:
The biometric identification control system provided by the embodiment of the present disclosure is applied to a vehicle equipped with a multimedia head unit. The biometric identification control system includes a biometric identifier, a multimedia head unit, and a vehicle body controller; wherein, the multimedia head unit is separately connected to the biometric identifier and the vehicle body controller;
the biometric identifier is used for capturing a biometric feature image, preprocessing the biometric feature image, and outputting biometric feature information; the multimedia head unit is used for receiving the biometric feature information, sequentially carrying out reprocessing, feature extraction, and comparison on the biometric feature information, and outputting a feature matching result; and, when the feature matching result indicates successful matching, sending a feature matching instruction to the vehicle body controller; the vehicle body controller is used for controlling vehicle response based on the feature matching instruction. Relying on the built-in multimedia head unit system of the vehicle, the biometric identification technology is integrated into the multimedia head unit system to complete secure interaction. By utilizing the powerful processing capability and computing resources of the multimedia head unit of the vehicle, image processing and identification can be carried out more quickly and efficiently, the system response speed is significantly improved, and the time delay is effectively shortened; the feature matching result output by the multimedia head unit after identifying the biometric feature image can indicate whether the person is the owner of the current vehicle. Palm vein is a unique biometric feature of human beings with a low false recognition rate, realizing accurate authentication and identification of the driver's identity; when the feature matching result is successful, the multimedia head unit can control the body parts of the vehicle through the vehicle body controller to realize automatic door unlocking and locking, automatic vehicle starting and other operations.

In this way, a biometric identification solution suitable for the on-vehicle environment is proposed with lower power consumption, shorter time delay and higher stability, which can adapt to the real-time requirements and complex driving environment during vehicle driving, and provide a more convenient and safe driving experience for vehicle owners.

The biometric identification method and the vehicle provided by the embodiments of the present disclosure have the same advantages as the above-mentioned system over the prior art, and will not be repeated here.

The above description is only a summary of the technical solution of the present disclosure. In order to understand the technical means of the present disclosure more clearly, the present disclosure can be implemented according to the content of the specification, and in order to make the above and other objectives, features and advantages of the present disclosure more obvious and understandable, the specific implementation modes of the present disclosure are specifically described below.

### BRIEF DESCRIPTION OF THE DRAWINGS

In order to explain the embodiments of the present disclosure or the technical solutions in the prior art more clearly, the drawings needed in the description of the embodiments will be briefly introduced below.
FIG. 1 is an overall framework diagram of a biometric identification control system provided by an embodiment of the present disclosure.
FIG. 2 is an implementation flow chart of a biometric identification control system provided by an embodiment of the present disclosure.
FIG. 3 is a working state diagram of a biometric identifier provided by an embodiment of the present disclosure.
FIG. 4 is a step flow chart of a biometric identification control method provided by an embodiment of the present disclosure.

### DETAILED DESCRIPTION

Exemplary embodiments of the present disclosure will be described in more detail below with reference to the accompanying drawings. Although the accompanying drawings show exemplary embodiments of the present disclosure, it should be understood that the present disclosure can be implemented in various forms and should not be limited by the embodiments set forth herein. On the contrary, these embodiments are provided to enable a more thorough understanding of the present disclosure and to fully convey the scope of the present disclosure to those skilled in the art.

Biometric identification technology refers to a technology for identity authentication and identification by identifying unique biological features of the human body, such as human face, fingerprint, iris, vein and the like. This technology has gradually become an important means of identity identification, and the corresponding biometric identification products have been widely applied in various fields such as traffic identification, subway gates, medical equipment management, social security and medical treatment, unmanned supermarket payment, and car keys. Wherein the palm vein identification technology can form a palm vein image with individual characteristics by utilizing the difference in the absorption rate of near-infrared light between deoxyhemoglobin in palm veins and other physiological tissues.

At present, a face and palm scanning integrated device has been developed based on the palm vein identification technology. The device includes a structured light projector, a floodlight projector, an infrared sensor and a controller. In the palm scanning mode, the floodlight projector is used to project floodlight, and the infrared sensor receives the floodlight signal to generate a second infrared image of palm veins. However, such biometric identification devices have many defects such as high power consumption, serious time delay, the need to assemble an additional vehicle-machine system to realize the identification function, and extremely high equipment investment cost. They can only be used in indoor scenes with low requirements on power consumption and time delay, and thus cannot be applied to on-vehicle systems with complex driving environments and driving requirements.

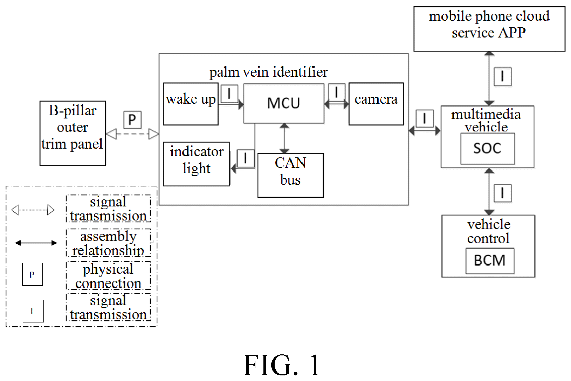

A first aspect of the present disclosure provides a biometric identification control system. Referring to FIG. 1, FIG. 1 shows an exemplary biometric identification control system according to some embodiments of the present disclosure. The system is applied to a vehicle equipped with a multimedia head unit. The biometric identification control system includes a biometric identifier, a multimedia head unit, and a vehicle body controller; wherein, the multimedia head unit is separately connected to the biometric identifier and the vehicle body controller; the biometric identifier is used for capturing a biometric feature image, preprocessing the biometric feature image, and outputting biometric feature information; the multimedia head unit is used for receiving the biometric feature information, sequentially carrying out reprocessing, feature extraction, and comparison on the biometric feature information, and outputting a feature matching result; and, when the feature matching result indicates successful matching, sending a feature matching instruction to the vehicle body controller; the vehicle body controller is used for controlling vehicle response based on the feature matching instruction.

Specifically, the present disclosure can apply the biometric identification control system to a vehicle equipped with a multimedia head unit (System-on-a-Chip, SOC) to complete information interaction. The vehicle can be a new energy vehicle, a fuel vehicle, a hybrid vehicle and the like. The SOC can be defined as a device responsible for and managing the multimedia and infotainment functions in the vehicle to realize multimedia functions such as audio playing, video display, navigation system, and communication functions. The biometric identifier can be defined as a device or component capable of capturing and processing individual biometric feature images, such as palm vein, fingerprint, iris, facial and other features. The vehicle body controller (Body Control Module, BCM) can be defined as an electronic control unit for controlling vehicle body parts and other electronic equipment. The vehicle body parts can include door locks, vehicle power packs, lighting systems, car windows, wipers, seat systems, air conditioning systems, steering wheels, rearview mirrors and the like.

The biometric identifier of the embodiment of the present disclosure specifically includes a capture device, and the capture device can be a palm vein identifier, and the biometric feature image captured by which corresponds to a palm vein image. In some embodiments, the biometric identifier can be configured to realize more functions such as data communication and device control. The palm vein image can be understood as an image showing the vein vessel lines of the human palm, fingers, or back of the hand formed by near-infrared reflection imaging. Since the palm vein image identifies and verifies the human vein texture, each person's palm vein texture is unique, identifiable (through near infrared rays of 740nm~940nm), slightly affected by age, different from other biometric identification technologies, with high identity authentication accuracy and less infringement on personal privacy, and the vein image cannot be forged or stolen. It is applied in the vehicle field to realize the identification of the vehicle owner's identity and improve the safety and convenience of the car.

In some embodiments, through the combination of palm vein identification technology and a vehicle memory system, the driver can synchronize the personal account and vehicle usage habits with the SOC through the palm vein identification technology to realize personalized functions such as music, navigation, and communication.

In this embodiment, the SOC establishes a connection with the palm vein identifier, and the multimedia head unit can receive the palm vein image captured by the palm vein identifier, and process and extract features from it.
Compared with an additionally configured host system or a on-board controller (Microcontroller Unit, MCU), the SOC of the vehicle has stronger processing capability, dedicated hardware acceleration and larger storage/cache capacity, enabling it to process feature matching more quickly and efficiently to obtain a feature matching result. Therefore, using the SOC for palm vein image identification can improve the processing efficiency of the system and further shorten the time delay. Wherein compared with the palm vein identification technology mentioned in the background art, whose power consumption is about 5mw and time delay is about 1.5s, the response time of obtaining the feature matching result indicating the identity of the owner of the current vehicle in the embodiment of the present disclosure is increased by at least 30%, and the time delay in the matching process is shortened to 300ms.

In this embodiment, a connection is established between the SOC and the BCM, and the SOC can send the feature matching result to the BCM. The feature matching result includes a feature matching result carrying successful matching information and a feature matching result carrying failed matching information. Only when the feature matching result contains successful matching information, a feature matching instruction is output to the BCM, and the feature matching instruction is deemed to indicate a successful feature matching result by default. When the feature matching result contains failed matching information, no control instruction is output to the BCM, and the BCM does not receive the control instruction, then the feature matching result is deemed to indicate a failed match by default.

The SOC can use its own algorithm software to reprocess, extract and compare features of the palm vein image to obtain a feature matching result. A successful feature matching result means that the captured palm vein image matches the image sample registered by the vehicle owner in the SOC feature library in advance. The matching can be set to mean that the two have a high similarity, and if the similarity reaches a set matching threshold or similarity measurement standard, it will be judged as a successful match, otherwise it will be judged as a failure.

In this embodiment, the BCM establishes a connection with the body parts of the vehicle. If the matching is successful, that is, the correct owner of the current vehicle is identified, the BCM can control at least one of the door locks, vehicle power packs, lighting systems, car windows, wipers, seat systems, air conditioning systems, steering wheels and rearview mirrors of the vehicle to perform actions.
The BCM can determine a control instruction corresponding to the corresponding vehicle body part according to the feature matching instruction, and the vehicle body part can execute a corresponding action corresponding to the control instruction according to the control instruction. For example, the BCM sends a door unlocking/locking control instruction to the door to unlock/close the door; for another example, an engine start instruction can be sent to the vehicle power pack to realize the functions of keyless entry and keyless vehicle starting.

In the above implementation process, the SOC, BCM, vehicle body parts, palm vein identifier and the like that need information transmission are communicatively connected with each other through a CAN bus to transmit signals carrying control information or data.

In this way, relying on the built-in multimedia head unit system of the vehicle, the biometric identification technology is integrated into the multimedia head unit system to complete secure interaction. By utilizing the powerful processing capability and computing resources of the vehicle's multimedia head unit, image processing and identification can be carried out more quickly and efficiently, the system response speed is significantly improved, and the time delay is effectively shortened; the feature matching result output by the multimedia head unit after identifying the biometric feature image can indicate whether the person is the owner of the current vehicle. Palm vein is a unique biometric feature of human beings with a low false recognition rate, realizing accurate authentication and identification of the driver's identity; when the feature matching result is successful, the multimedia head unit can control the body parts of the vehicle through the vehicle body controller to realize automatic door unlocking and locking, automatic vehicle starting and other operations. The biometric identification technology suitable for the on-vehicle environment with lower power consumption, shorter time delay and higher stability can adapt to the real-time requirements and complex driving environment during vehicle driving, and provide a more convenient and safe driving experience for vehicle owners.

Optionally, in an embodiment of the present disclosure, the biometric identifier for capturing palm vein images includes:

a wake-up device, a on-board controller, a capture device and a display; wherein, the on-board controller is separately connected to the wake-up device, the capture device and the display; the multimedia head unit is separately connected to the capture device and the on-board controller. In this embodiment, the display can include at least one indicator light. The capture device can be specifically a palm vein capture device. The on-board controller is used for receiving a wake-up signal monitored by the wake-up device, controlling the palm vein capture device to capture the palm vein image, and controlling at least a first part of the indicator lights to be in different display modes; and/or, used for receiving the feature matching result output by the multimedia head unit, and controlling at least a second part of the indicator lights to be in different prompt modes.

Specifically, a millimeter wave radar can be used as the wake-up device. When the driver approaches the vehicle, the wake-up device detects the approach of an object, which can be a person or an obstacle, wakes up the palm vein identifier in advance, enters a stage of preparing to capture palm vein information, records the relative position of the obstacle or the driver, and outputs a wake-up signal with object position information.

The MCU establishes a connection with the wake-up device and can receive a wake-up signal, which indicates the presence of the driver and triggers the palm vein identification process. The MCU establishes a connection with the palm vein capture device to make the palm vein capture device in a working state and capture the palm vein image of the object. In some embodiments, the palm vein capture device can be a near-infrared camera, an infrared sensor, an ultrasonic sensor, a laser camera or other devices suitable for palm vein capture.

After receiving the wake-up signal, the MCU sends a turn-on signal to the camera, and after the driver places the palm in the palm scanning area, the camera captures the palm vein image. The camera establishes a connection with the SOC and sends image data to the SOC through a video transmission line. The SOC executes the algorithm processing mentioned above.

It can be understood that the palm scanning area is the viewing angle range that the camera can monitor. To ensure that the camera can completely capture the driver's palm image, the viewing angle range of the camera can be adjusted through appropriate lens design and installation position to meet the requirements of the palm scanning area.

In some embodiments, the camera and the millimeter wave radar are located on the B-pillar outer trim panel of the vehicle.

Preferably, the viewing angle range monitored by the wake-up device covers the viewing angle range monitored by the palm vein capture device; the viewing angle range at least includes a monitoring angle, and the on-board controller is configured to adjust the angular direction of the palm vein capture device according to the position of an object within the viewing angle range of the wake-up device.

In this embodiment, the Field of View (FOV) can include a monitoring angle and a monitoring displacement. The monitoring angle includes the horizontal and vertical angle ranges that the millimeter wave radar or camera can perceive, which usually starts from the central angle of the FOV angle and covers the angle ranges left and right, up and down. For example, the FOV of a millimeter wave radar can be 120° horizontally and 60° vertically, which means it can cover a range of 120° in the horizontal direction and 60° in the vertical direction. The monitoring displacement can be understood as the maximum distance at which the millimeter wave radar or camera can effectively identify and capture the target object.

In some embodiments, the FOV of the millimeter wave radar is expanded to 120° (settable as required), and the identification distance is set to 50cm (settable according to selection and requirements); the FOV angle of the camera is set to 110° (settable as required), and the identification distance is set to 8-30cm (adjustable according to the selection range of the camera).

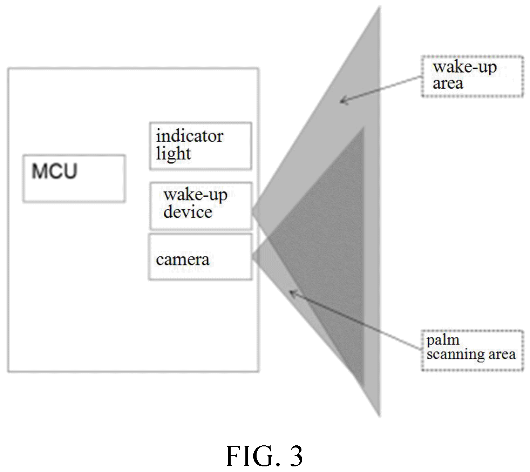

In this embodiment, referring to the working state diagram of the biometric identifier output in FIG. 3, the FOV monitored by the camera forms a palm scanning area, and the FOV monitored by the wake-up device forms a wake-up area. The area of the palm scanning area is larger than that of the wake-up area, so that the palm scanning area falls within the range of the wake-up area, so that the palm vein identifier can be woken up in advance to enter the stage of preparing to capture palm vein information when identity identification is performed, further improving the response speed of the vehicle.

According to the position of the object in the palm scanning area, the MCU controls the angular direction of the FOV of the camera to realize the adaptive FOV field of view function, and the monitoring angle of the camera can be adjusted in the range of 0~180°. The angular direction can indicate the angular offset or rotation direction of the camera, such as front, rear, left, right and the like. After entering the stage of preparing to capture palm vein information, by adjusting the angular direction, it can be ensured that the sensor or device performs accurate monitoring and observation within a specific monitoring angle range.

In this way, the wake-up device provides the relative position of the object, and the central angle of the FOV angle of the camera is adjusted to the direction of the obstacle area, so as to ensure that the camera can always align with the vehicle owner's palm, realize accurate capture of palm vein images in different positions and postures, help improve the accuracy and reliability of the palm vein identifier, and meet the requirements of vehicle owner identity verification.

It is worth mentioning that the MCU is connected with a plurality of indicator lights. Wherein some of the plurality of indicator lights communicate with the wake-up device through the MCU, that is, these indicator lights are used to provide the driver with an indication representing the working state of the wake-up device, such as wake-up or sleep, and the MCU controls the on and off states of the indicator lights through the connection with the indicator lights. According to the received wake-up signal, the MCU transmits a corresponding signal or command to the indicator light to display a corresponding display mode, for example, green indicates a wake-up state (i.e., an object is approaching the vehicle), red indicates a sleep state, or other customized prompt modes.

The remaining part of the plurality of indicator lights communicates with the SOC through the MCU, that is, the corresponding part of the indicator lights is used to provide the driver with an indication representing the feature matching result, such as successful or failed identification, and the MCU controls the on and off states of the indicator lights through the connection with the indicator lights. According to the received feature matching result, the MCU transmits a corresponding signal or command to the corresponding indicator light to display a corresponding prompt mode, for example, green indicates successful identification (i.e., the object is the vehicle owner), red indicates failed identification, or other customized prompt modes.

Certainly, this embodiment only exemplarily shows the way of visual display or prompt, and the on and off states of the indicator lights can be selected in a wide range. Moreover, the display color of the indicator light representing the working state of the wake-up device is preferably different from the prompt color of the indicator light representing the feature matching result of the SOC.

Optionally, in an embodiment of the present disclosure, the palm vein capture device includes a preprocessing unit, and the preprocessing unit is used for performing primary filtering processing on the palm vein image. In the above process, the camera can perform primary filtering processing on the acquired palm vein image and send it to the vehicle-machine multimedia through a video transmission line. In this embodiment, the preprocessing unit built in the palm vein capture device undertakes part of the image processing functions, does not require too many computing resources and processor performance, reduces the requirements on the processor, thereby reducing the processing requirements and power consumption of the SOC undertaking the biological matching function, and thus reducing the system power consumption. Wherein compared with the palm vein identification technology mentioned in the background art, whose power consumption is about 5mw and time delay is about 1.5s, the power consumption of the vehicle-machine system in the embodiment of the present disclosure is reduced by at least 50%.

After the preprocessing unit in the biometric identifier preprocesses the biometric feature image, the multimedia head unit can receive the biometric feature information, sequentially carry out reprocessing, feature extraction and comparison on the biometric feature information, and output a feature matching result. In this embodiment, the multimedia head unit includes an image processor, a feature library, a feature matcher, and a controller; wherein, the image processor is used for performing filtering processing and binarization processing on the biometric feature information; the feature library is used for storing image samples of a vehicle owner; the feature matcher is used for carrying out feature extraction on the biometric feature information after binarization processing, comparing with the image samples, and outputting a feature matching result; the controller is used for sending a feature matching instruction to the vehicle body controller, when the feature matching result indicates successful matching.

Specifically, by using the SOC, the palm vein image after preliminary filtering processing is subjected to filtering processing and binarization processing. The filtering processing step can include palm direction correction processing, image enhancement processing, image dimension reduction processing and the like to remove noise or interference in the image or signal, make it smoother or clearer, and thus improve the accuracy and reliability of subsequent image processing. Binarization processing is defined as converting the palm vein image into a binary image to simplify the data volume of the palm vein image and facilitate subsequent feature extraction and comparison. The image processor establishes a connection with the feature matcher, extracts and generates corresponding palm vein feature values from the palm vein image after binarization processing, compares with the image samples stored in advance in the feature library, and outputs a feature matching result. If the palm vein feature value matches the image sample, the controller outputs a feature matching instruction carrying successful matching information; otherwise, it outputs a feature matching instruction carrying failed matching information.

In some embodiments, the controller can send vehicle safety reminder information to the terminal, and/or control the system to enter a sleep state when the feature matching result indicates failed matching for N consecutive times.

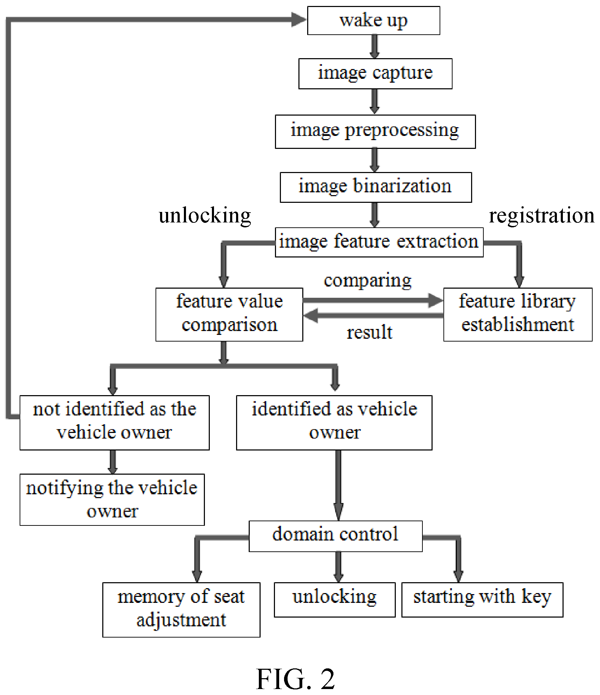

Continuing to refer to FIG. 2, FIG. 2 is an implementation flow chart of the biometric identification control system of the present disclosure; in a specific implementation flow, the establishment of the feature library is realized by the following means:
The system further includes a terminal, the terminal is connected to the multimedia head unit; wherein, the multimedia head unit is used for receiving a registration instruction sent by the terminal, controlling the biometric identifier to capture image samples of the vehicle owner, and storing the image samples to establish the feature library.

Specifically, to use the palm vein identification system, the vehicle owner's identity registration should be completed before the vehicle owner uses the vehicle for the first time. The terminal can include a mobile phone APP, a Bluetooth device or a vehicle-machine multimedia APP, and a registration instruction is sent through the terminal to trigger the biometric identification control system to enter a registration mode. In the registration mode, there is no need to trigger the wake-up device, and the SOC directly controls the camera to capture the palm vein image of the vehicle owner, which is the registered image sample. After the filtering processing and binarization processing mentioned above, the palm vein feature value of the vehicle owner is analyzed, and the feature value is stored in a non-volatile memory, such as at least one disk memory. Optionally, the memory can also be at least one storage device located far away from the aforementioned processor, so as to establish a feature library of the owner of the current vehicle as a basis for subsequent feature comparison and identity verification.

Before using the vehicle each time, when the vehicle owner places the palm vein for identification, the SOC will perform corresponding operations such as image processing and feature extraction on the captured palm vein image through the feature matcher, and compare with the image samples in the feature library.

In a specific embodiment of unlocking, the registered vehicle owner moves the palm to the wake-up area, the wake-up device wakes up the MCU and the camera. When the palm moves into the palm scanning area, the palm vein identification control system has been started completely, starts to capture palm vein data and transmits it to the SOC, obtains a clear palm vein picture from the intercepted video stream, uses the high computing power processing capability of the vehicle-machine SOC to perform binarization processing on the vein picture, analyzes the feature value, compares the feature value with the samples in the feature library, and identifies the driver's identity.

If the matching fails and the person is not identified as the vehicle owner, the system automatically enters a sleep state and waits for the next wake-up identification. If the identification fails for N consecutive times and the failure results are from the same person, the system judges the person as a car thief, notifies the vehicle owner through cloud service and mobile phone short message, and the prompt information is similar to "Someone is trying to unlock your car, please make sure your car is in a safe area". If the matching is successful and the person is identified as the vehicle owner, the SOC transmits the feature matching result to the BCM through the vehicle CAN network, and unlocks the vehicle after safety verification.

Wherein, N can be a set number of times, such as 2, 3, 4, etc.

In an embodiment, the system further includes a memory, the memory is connected to the multimedia head unit; wherein, the multimedia head unit is used for receiving historical driving habit information sent by the memory, and sending a adjustment instruction to the vehicle body controller; the vehicle body controller is used for controlling the vehicle to execute a response action corresponding to the adjustment instruction based on the adjustment instruction to realize personalized setting.

In the above process, the SOC establishes a connection with the memory, and the memory is defined as a device for storing the historical driving habit information of the vehicle owner. The historical driving habit information includes personalized settings such as seat adjustment, steering wheel adjustment, music preference, and atmosphere setting. When the vehicle owner uses the vehicle, the memory records the vehicle owner's operation and setting habits, such as adjusting the position and angle of the seat, adjusting the position of the steering wheel, selecting favorite music and the like.

After receiving the historical driving habit information sent by the memory, the SOC generates a adjustment instruction according to the information, determines and sends the instruction to the BCM. The BCM determines a control instruction corresponding to the corresponding vehicle body parts of the vehicle according to the adjustment instruction, and the vehicle body parts can execute a corresponding action corresponding to the control instruction according to the control instruction. For example, the BCM sends a seat adjustment instruction to the seat system to realize the function of automatically adjusting the height, tilt angle and position of the seat; for another example, a steering wheel adjustment instruction can be sent to the steering wheel to realize the function of automatically adjusting the position and tilt angle of the steering wheel; for another example, a light adjustment instruction can be sent to the lighting system to realize the function of automatically adjusting the color, brightness and flashing mode of the atmosphere light.

It should be explained that according to the analysis of historical driving habits, the atmosphere setting, personalized setting and comfort setting of the whole vehicle can be bound to the vehicle owner's account, which stores the personalized settings. The SOC can automatically log in to the vehicle owner's account and trigger the memory system to read and write the vehicle owner's personalized settings, so as to complete personalized welcome of the car, memory adjustment of the seat and steering wheel, synchronization of multimedia song membership, personalized adjustment of the atmosphere light and other personalized settings. After using the palm vein identification control system for many times, the vehicle can accurately respond to the corresponding settings, making the car more intelligent and improving the user experience.

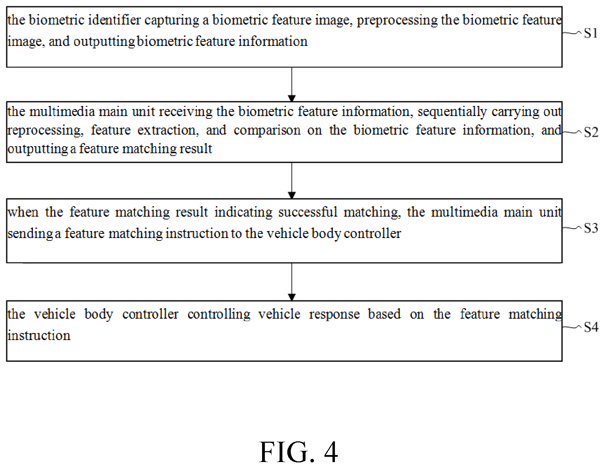

Referring to FIG. 4, FIG. 4 shows a step flow chart of the biometric identification control method of the present disclosure.

A second aspect of the present disclosure provides a biometric identification control method, which is applied to the biometric identification control system provided in the first aspect of the present disclosure. The method includes the following steps:
Step S1: The biometric identifier captures a biometric feature image, preprocesses the biometric feature image, and outputs biometric feature information;
Step S2: The multimedia head unit receives the biometric feature information, sequentially carries out reprocessing, feature extraction, and comparison on the biometric feature information, and outputs a feature matching result;
Step S3: When the feature matching result indicates successful matching, the multimedia head unit sends a feature matching instruction to the vehicle body controller;
Step S4: The vehicle body controller controls vehicle response based on the feature matching instruction.

Optionally, the step S2 further includes:
Step S21: The image processor performs filtering processing and binarization processing on the biometric feature information;
Step S22: The feature library stores image samples of a vehicle owner;
Step S23: The feature matcher carries out feature extraction on the biometric feature information after binarization processing, conducts comparison with the image samples, and outputs a feature matching result;
Step S24: The controller sends a feature matching instruction to the vehicle body controller when the feature matching result indicates successful matching.

Optionally, the step S12 further includes:
Step S121: The multimedia head unit receives a registration instruction sent by the terminal, controls the biometric identifier to capture image samples of the vehicle owner, and stores the image samples.

Optionally, the step S2 further includes:
Step S25: The controller sends vehicle safety reminder information to the terminal, and/or controls the system to enter a sleep state when the feature matching result indicates failed matching for N consecutive times.

Optionally, the step S1 further includes:
Step S11: The on-board controller receives a wake-up signal monitored by the wake-up device, and controls the capture device to capture the biometric feature image;
Step S12: The preprocessing unit performs primary filtering processing on the biometric feature image, and outputs the biometric feature information.

Optionally, the method further includes:
Step S5: The on-board controller controls the display to be in different display modes based on the received wake-up signal; and/or,
Step S6: The on-board controller controls the display to be in different prompt modes based on the received feature matching result output by the multimedia head unit.

Optionally, the step S1 further includes:
Step S13: The on-board controller adjusts the angular direction of the capture device according to the position of an object within the viewing angle range of the wake-up device.

Optionally, before the step S4, the method includes:
Step S7: The multimedia head unit receives historical driving habit information sent by the memory, and sends an adjustment instruction to the vehicle body controller;
Step S8: The vehicle body controller controls the vehicle to execute a response action corresponding to the adjustment instruction based on the adjustment instruction.

A third aspect of the present disclosure provides a vehicle, which is equipped with a multimedia head unit. The vehicle is equipped with the biometric identification control system provided in the first aspect of the present disclosure, and/or executes the biometric identification control method provided in the second aspect of the present disclosure.

For the above method embodiments and vehicle embodiments, since they are basically similar to the system embodiments, the description is relatively simple, and for the relevant parts, reference can be made to the description of the system embodiments.

In another embodiment provided by the present disclosure, a computer program product containing instructions is also provided, which makes the computer to execute the biometric identification control system described in the above embodiments when run on a computer.

In the above embodiments, all or part of the present disclosure can be implemented by software, hardware, firmware or any combination thereof. When implemented by software, it can be implemented in the form of a computer program product in whole or in part. The computer program product includes one or more computer instructions. When the computer program instructions are loaded and executed on a computer, all or part of the processes or functions according to the embodiments of the present disclosure are generated. The computer can be a general-purpose computer, a special-purpose computer, a computer network, or other programmable devices. The computer instructions can be stored in a computer-readable storage medium or transmitted from one computer-readable storage medium to another computer-readable storage medium. For example, the computer instructions can be transmitted from a website, computer, server or data center to another website, computer, server or data center through a wired way (such as coaxial cable, optical fiber, Digital Subscriber Line (DSL)) or wireless way (such as infrared, wireless, microwave, etc.). The computer-readable storage medium can be any available medium that can be accessed by a computer or a data storage device such as a server and a data center integrated with one or more available media. The available medium can be a magnetic medium (e.g., floppy disk, hard disk, magnetic tape), an optical medium (e.g., DVD), or a semiconductor medium (e.g., Solid State Disk (SSD)).

It should be noted that in this document, relational terms such as first and second are only used to distinguish one entity or operation from another entity or operation, and do not necessarily require or imply that there is any such actual relationship or order between these entities or operations. Moreover, the terms "comprise", "include" or any other variants thereof are intended to cover non-exclusive inclusion, so that a process, method, article or device including a series of elements not only includes those elements, but also includes other elements not explicitly listed, or also includes the inherent elements of such process, method, article or device. Without more restrictions, an element limited by the sentence "including a..." does not exclude the existence of other same elements in the process, method, article or device including the element.

Each embodiment in this specification is described in a related way, and the same and similar parts between the various embodiments can be referred to each other. Each embodiment focuses on the differences from other embodiments. For the embodiments of the device, electronic equipment, computer-readable storage medium and the computer program product containing instructions, since they are basically similar to the method embodiments, the description is relatively simple, and for the relevant parts, reference can be made to the description of the method embodiments.

The above description is only a preferred embodiment of the present disclosure and is not used to limit the protection scope of the present disclosure. Any modification, equivalent replacement, improvement and the like made within the spirit and principles of the present disclosure are included in the protection scope of the present disclosure.

## Claims

1. A biometric identification control system, being applied to a vehicle equipped with a multimedia head unit, the biometric identification control system comprising a biometric identifier, a multimedia head unit, and a vehicle body controller; wherein,
the multimedia head unit being separately connected to the biometric identifier and the vehicle body controller;
the biometric identifier being used for capturing a biometric feature image, preprocessing the biometric feature image, and outputting biometric feature information;
the multimedia head unit being used for receiving the biometric feature information, sequentially carrying out reprocessing, feature extraction, and comparison on the biometric feature information, and outputting a feature matching result; and,
when the feature matching result indicating successful matching, sending a feature matching instruction to the vehicle body controller;
the vehicle body controller being used for controlling vehicle response based on the feature matching instruction.

2. The biometric identification control system according to claim 1, wherein the multimedia head unit comprising an image processor, a feature library, a feature matcher, and a controller; wherein,
the image processor being used for performing filtering processing and binarization processing on the biometric feature information;
the feature library being used for storing image samples of a vehicle owner;
the feature matcher being used for carrying out feature extraction on the biometric feature information after binarization processing, comparing with the image samples, and outputting a feature matching result; and
the controller being used for sending a feature matching instruction to the vehicle body controller when the feature matching result indicating successful matching.

3. The biometric identification control system according to claim 2, wherein the biometric identification control system further comprising:
a terminal, the terminal being connected to the multimedia head unit; wherein,
the multimedia head unit being further used for receiving a registration instruction sent by the terminal, controlling the biometric identifier to capture image samples of the vehicle owner, and storing the image samples to establish the feature library.

4. The biometric identification control system according to claim 3, wherein the controller being further used for sending vehicle safety reminder information to the terminal, and/or controlling the system to enter a sleep state, when the feature matching result indicates failed matching for N consecutive times.

5. The biometric identification control system according to any one of claims 1 to 4, wherein the biometric identifier comprising a wake-up device, a on-board controller, and a capture device; the on-board controller being separately connected to the wake-up device and the capture device; the capture device comprising a preprocessing unit;
the on-board controller being used for receiving a wake-up signal monitored by the wake-up device, and controlling the capture device to capture the biometric feature image; and
the preprocessing unit being used for performing primary filtering processing on the biometric feature image, and outputting the biometric feature information.

6. The biometric identification control system according to claim 5, wherein the biometric identifier further comprising a display; the on-board controller being connected to the display;
the on-board controller being used for controlling the display to be in different display modes based on the received wake-up signal; and/or,
used for controlling the display to be in different prompt modes based on the received feature matching result output by the multimedia head unit.

7. The biometric identification control system according to claim 5 or 6, wherein the viewing angle range monitored by the wake-up device covering the viewing angle range monitored by the capture device;
the viewing angle range at least comprising a monitoring angle;
the on-board controller being used for adjusting the angular direction of the capture device according to the position of an object within the viewing angle range of the wake-up device.

8. The biometric identification control system according to any one of claims 1 to 7, wherein the biometric identification control system further comprising a memory; the memory being connected to the multimedia head unit; wherein,
the multimedia head unit being used for receiving historical driving habit information sent by the memory, and sending a adjustment instruction to the vehicle body controller; and
the vehicle body controller being used for controlling the vehicle to execute a response action corresponding to the adjustment instruction based on the adjustment instruction.

9. A biometric identification control method, being applied to the biometric identification control system according to any one of claims 1 to 8, the method comprising:
the biometric identifier capturing a biometric feature image, preprocessing the biometric feature image, and outputting biometric feature information;
the multimedia head unit receiving the biometric feature information, sequentially carrying out reprocessing, feature extraction, and comparison on the biometric feature information, and outputting a feature matching result;
when the feature matching result indicating successful matching, the multimedia head unit sending a feature matching instruction to the vehicle body controller; and
the vehicle body controller controlling vehicle response based on the feature matching instruction.

10. A vehicle, being equipped with a multimedia head unit, the vehicle being equipped with the biometric identification control system according to any one of claims 1 to 8, and/or executing the biometric identification control method according to claim 9.
